# EUROPEAN PATENT APPLICATION

(11) **EP 4 836 507 A1**
(43) Date of publication of application: **04.11.2026**
(21) Application number: 24912503.0
(22) Date of filing: 17.12.2024
(51) Int. Cl.: H04W 24/10, H04W 36/30, H04W 88/04, H04W 92/18

(54) **COMMUNICATION DEVICE, BASE STATION, CONTROL METHOD, AND PROGRAM**

(30) Priority: 27.12.2023 JP 2023221346
(71) Applicant: Canon Kabushiki Kaisha, Tokyo 146-8501 (JP)
(72) Inventor: KATSURAGI Tetsuya, Tokyo 146-8501 (JP)
(74) Representative: Canon Europe Limited
(86) International application number: PCT/JP2024/044520
(87) International publication number: WO 2025/142614

(57) **Abstract**

A communication device that relays communication between a User Equipment (UE) and a base station, the communication device includes a measurement means that measures signal strength of communication performed with a UE, and a notification means that notifies a base station of a measurement result from the measurement means. In a relay state in which communication between the UE and the base station is relayed, the notification means notifies the base station of the measurement result regarding the UE for which communication is relayed.

## Description

### Technical Field

The present disclosure relates to a communication device, a base station, a control method, and a program.

### Background Art

In recent years, specifications have been developed for 3rd Generation Partnership Project (3GPP^{®}) Long Term Evolution (LTE) and 5th Generation New Radio (5G NR). In this context, a standard specification called Sidelink communication (hereinafter also referred to as "Sidelink") has been developed. This specification enables direct wireless communication between devices using an interface called PC5 without using a mobile communication network (core network).

Furthermore, 3GPP is developing specifications to extend the range of Sidelink communication through a Sidelink relay function, in which Sidelink communication is relayed via a relay device (relay User Equipment (UE)). 3GPP specifies, for a communication terminal (remote UE) having a function to connect to a base station through a Sidelink function relay, a means for switching from an indirect path to a direct path and a means for switching from a direct path to an indirect path. The indirect path in this case corresponds to a communication path for connection to the base station via a relay UE, and the direct path corresponds to a communication path for connection to the base station without using a relay UE. In this case, switching from an indirect path to a direct path or switching from a direct path to an indirect path can be realized without interrupting the ongoing service.

In PTL 1, improvements have been proposed to address an issue arising from the procedure (discovery) when a remote UE is connected to a base station via a relay UE.

### Citation List

### Patent Literature

PTL 1: PCT Japanese Translation Patent Publication No. 2018-535594

### Summary of Invention

### Technical Problem

Currently, 3GPP does not specify a method for determining when to switch from an indirect path to an indirect path. Thus, there is an issue that a relay UE cannot be appropriately selected.

The present invention has been made in light of at least one of the above-mentioned issues. One aspect of the present invention is to provide a mechanism to enable appropriate selection of a relay UE.

### Solution to Problem

A communication device according to an aspect of the present invention is a communication device that relays communication between a User Equipment (UE) and a base station, the communication device including:
a measurement means that measures signal strength of communication performed with a UE, and
a notification means that notifies a base station of a measurement result from the measurement means, and
in a relay state in which communication between the UE and the base station is relayed, the notification means notifies the base station of the measurement result regarding the UE for which communication is relayed.

### Advantageous Effects of Invention

According to an aspect of the present invention, it is possible to appropriately select a relay UE.

### Brief Description of Drawings

[Fig. 1] Fig. 1 is a diagram illustrating an example of the configuration of a communication system according to the present embodiment.
[Fig. 2] Fig. 2 is a block diagram illustrating an example of a functional configuration of a base station according to the present embodiment.
[Fig. 3] Fig. 3 is a block diagram illustrating an example of a functional configuration of a remote UE according to the present embodiment.
[Fig. 4] Fig. 4 is a block diagram illustrating an example of a functional configuration of a relay UE according to the present embodiment.
[Fig. 5] Fig. 5 is a sequence diagram illustrating an example of communication between communication devices according to a first embodiment.
[Fig. 6] Fig. 6 is an example of a flowchart between the communication devices according to the first embodiment.
[Fig. 7A] Fig. 7A is an example of a flowchart between the communication devices according to the first embodiment.
[Fig. 7B] Fig. 7B is an example of a flowchart between the communication devices according to the first embodiment.
[Fig. 8] Fig. 8 is an example of a flowchart between the communication devices according to the first embodiment.
[Fig. 9] Fig. 9 is an example of a flowchart according to a modification of Fig. 7B.
[Fig. 10] Fig. 10 is a sequence diagram illustrating an example of communication between the communication devices according to a second embodiment.

### Description of Embodiments

In the following, exemplary embodiments will be described individually in detail with reference to the accompanying drawings. In the following description, "number ***" in TS*** indicates a technical specification number in the 3GPP standard.

### [First Embodiment]

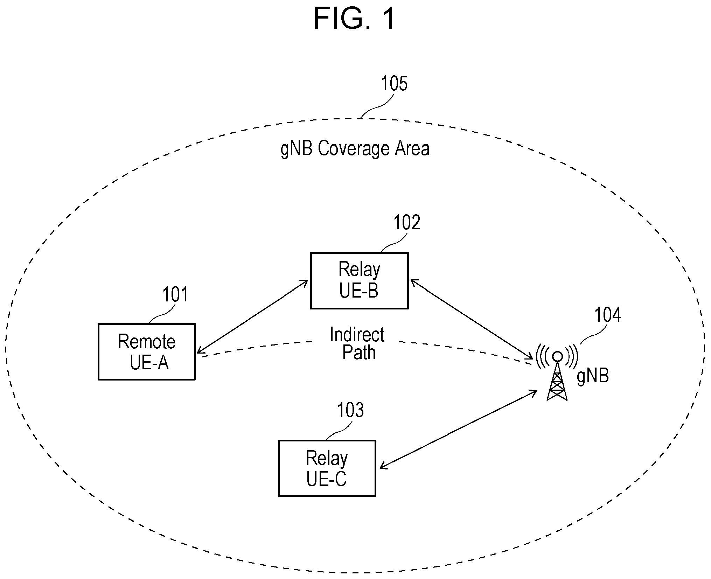

Fig. 1 is a diagram illustrating an example of the configuration of a communication system according to the present embodiment. The system according to the present embodiment includes UEs 101 to 103, a base station gNB 104, and a core network (not illustrated) to which the gNB 104 is connected via a fiber or the like. gNB is an abbreviation for gNodeB, and gNodeB is an abbreviation for Next Generation Node B. UE is an abbreviation for User Equipment.

In the system in Fig. 1, a remote UE-A (101), a relay UE-B (102), and a relay UE-C (103) are all in a coverage area (105) of the gNB (104).

The remote UE-A (101) communicates with the gNB (104) using Sidelink relay communication. The relay UE-B (102) operates as a relay UE that relays communication between the remote UE-A (101) and the gNB (104) using a Sidelink relay function. That is, the remote UE-A (101) is connected to the base station by an indirect path through the relay UE-B

(102) (Indirect Path illustrated in Fig. 1). Note that the remote UE-A (101) communicates data with the base station and devices on the core network, which is not illustrated. In addition, a Uu link, which will be described below, refers to a link in a case where the remote UE-A (101) communicates directly with the gNB (104) without using a relay UE.

The relay UE-C (103) has a Sidelink relay function and can operate as a relay UE. The relay UE-C (103) is connected to the gNB (104).

The remote UE-A (101) can transmit a discovery signal to a neighboring UE (namely, the relay UE-C (103)) to search for the relay UE-B (102) or another relay UE (a candidate relay UE). The remote UE-A (101) can receive, from the neighboring UE (namely, the relay UE-C (103)), a response signal to the transmitted discovery signal.

Note that the discovery signal may be a Soliciation Message for 5G ProSe direct discovery or 5G ProSe UE-to-Network Relay Discovery. Note that ProSe is an abbreviation for (Proximity based Services). The response signal may be a Response Message to the Soliciation Message.

A discovery signal transmitted from the neighboring UE may be a 5G ProSe UE-to-Network Relay direct discovery Announcement message. Alternatively, such a discovery signal may be Additional Information. A discovery procedure may also be based on the remote UE-A (101) receiving a 5G ProSe UE-to-Network Relay direct discovery Announcement message. Alternatively, such a discovery procedure may be based on the remote UE-A (101) receiving Additional Information.

The relay UE-C (103) can respond to a discovery signal from the remote UE-A (101). The relay UE-C (103) can also transmit a discovery signal to neighboring UEs by itself.

The relay UE-B (102) is a relay UE. Similar to the relay UE-C (103), the relay UE-B (102) can respond to a discovery signal and transmit a discovery signal to neighboring UEs by itself.

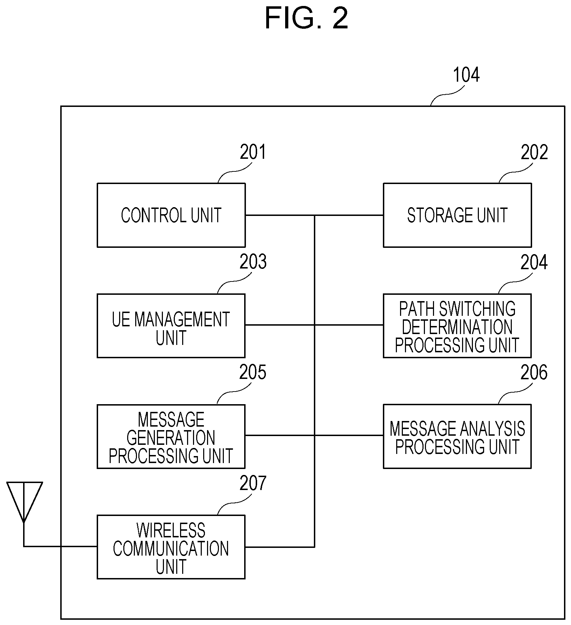

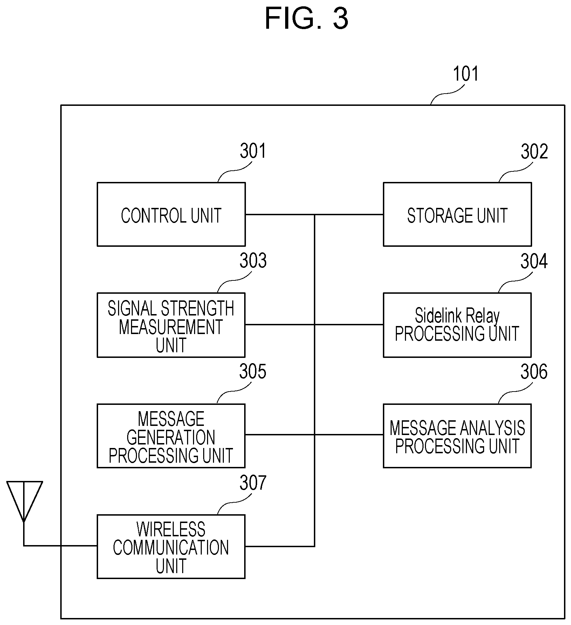

Fig. 2 is a block diagram illustrating an example of a functional configuration of the base station 104 according to the present embodiment. In the following, one or more or all of the functional blocks described with reference to Figs. 2 and 3 may be replaced with other functional blocks that achieve substantially the same functions, one or more of the functional blocks may be omitted, or functional blocks may further be added. One functional block described below may be divided into multiple functional blocks, or multiple functional blocks may be integrated into a single functional block.

In the example illustrated in Fig. 2, the base station 104 includes a control unit 201, a storage unit 202, a UE management unit 203, a path switching determination processing unit 204, a message generation processing unit 205, a message analysis processing unit 206, and a wireless communication unit 207.

The control unit 201 controls the operation of the base station 104. The control unit 201 includes, for example, one or more processors, such as a central processing unit (CPU) or a microprocessor unit (MPU), and controls the entire communication device by executing a control program loaded into a random access memory (RAM) serving as the storage unit 202. Note that each process performed by the control unit 201 and described in the flowcharts below can also be realized using hardware circuits, such as an ASIC and a Field Programmable Gate Array (FPGA). ASIC is an abbreviation for Application Specific Integrated Circuit. In addition, the processes described in the flowcharts below can also be realized by cooperation between the hardware circuits and the processor, such as a CPU or an MPU.

The storage unit 202 stores information used by the control unit 201 for control and information related to communication. The storage unit 202 may include a main memory unit and an auxiliary memory unit. The main memory unit is, for example, a read only memory (ROM) or a random access memory (RAM). The main memory unit may store or temporarily store programs and data such as an operating system (OS), which is the basic software executed by the control unit 201, and application software. The auxiliary memory unit is, for example, a hard disk drive (HDD) or a solid state drive (SSD), and may store data related to the application software, for example. For example, a control program stored in a nonvolatile memory area is loaded into the RAM and is executed by the processor included in the control unit 201. In this manner, the control unit 201 and the storage unit 202 may function as a so-called computer.

The storage unit 202 may include a recording medium that stores predetermined programs. The programs stored in this recording medium may be installed via a drive device or the like, and the installed predetermined programs may be executable by the control unit 201. As the recording medium, various types of recording media can be used. For example, the recording medium may be a recording medium that records information optically, electrically, or magnetically, such as a compact disc read-only memory (CD-ROM), a flexible disk, or a magneto-optical disk. Moreover, the recording medium may be, for example, a semiconductor memory that electrically records information, such as a ROM or a flash memory.

Note that carrier waves are not included in the recording medium.

The UE management unit 203 manages UE information in the base station coverage area. The UE management unit 203 manages UE information including the IDs of served UEs and measurement results (such as the signal strength of a Uu link described below) reported by the served UEs. Based on the UE information managed by the UE management unit 203, the path switching determination processing unit 204 determines whether each UE under management is to be connected using an indirect path or a direct path. The message generation processing unit 205 generates a message used to command path switching. The message analysis processing unit 206 analyzes messages received from the served UEs.

Note that the functions corresponding to one or more from among the UE management unit 203, the path switching determination processing unit 204, and the message generation processing unit 205 may be realized as software modules realized by the control unit 201.

The wireless communication unit 207 transmits and receives information to and from the served UEs through wireless communication. For example, the wireless communication unit 207 performs processing for transmitting a message generated by the message generation processing unit 205 and processing for receiving a message from each served UE.

Fig. 3 is a block diagram illustrating an example of a functional configuration of a remote UE (for example, the remote UE-A (101)) according to the present embodiment.

In the example illustrated in Fig. 3, the remote UE includes a control unit 301, a storage unit 302, a signal strength measurement unit 303, a Sidelink Relay processing unit 304, a message generation processing unit 305, a message analysis processing unit 306, and a wireless communication unit 307.

The control unit 301 controls the operation of the remote UE. The control unit 301 includes, for example, one or more processors, such as a CPU or an MPU, and controls the entire communication device by executing a control program loaded into a random access memory (RAM) serving as the storage unit 302. Note that each process performed by the control unit 301 and described in the flowcharts below can also be realized using hardware circuits, such as an ASIC and an FPGA. In addition, the processes described in the flowcharts below can also be realized by cooperation between the hardware circuits and the processor, such as a CPU or an MPU.

The storage unit 302 stores information used by the control unit 301 for control and information related to communication.

The signal strength measurement unit 303 measures the "signal strength between the remote UE and a relay UE (relay link, PC5 link)", the "signal strength between the remote UE and a base station (Uu link)", and the "signal strength between the remote UE and a candidate relay UE" as seen from the remote UE. Note that each signal strength measured by the signal strength measurement unit 303 is stored in the storage unit 302. The information stored in the storage unit 302 may be information regarding measured signal strength values, such as SL-RSRP and SD-RSRP. SL-RSRP is an abbreviation for Sidelink Reference Signal Received Power. SD-RSRP is an abbreviation for Sidelink Discovery Reference Signal Received Power.

The Sidelink Relay processing unit 304 enables a connection to the base station 104 by establishing a Sidelink connection with a relay UE and using the relay function of the relay UE (namely, through an indirect path).

The message generation processing unit 305 generates various messages. The various messages include a discovery signal transmitted to neighboring relay UEs, and an RRC Reconfiguration Complete message and a Measurement report transmitted to the base station 104.

The message analysis processing unit 306 analyzes messages such as discovery signals and response signals transmitted from neighboring relay UEs and an RRC Reconfiguration message and the like transmitted from the base station 104.

The wireless communication unit 307 transmits and receives information to and from the neighboring relay UEs and base station 104 through wireless communication. The wireless communication unit 307 performs processing for transmitting a message generated by the message generation processing unit 305 and processing for receiving messages from the neighboring relay UEs and base station 104.

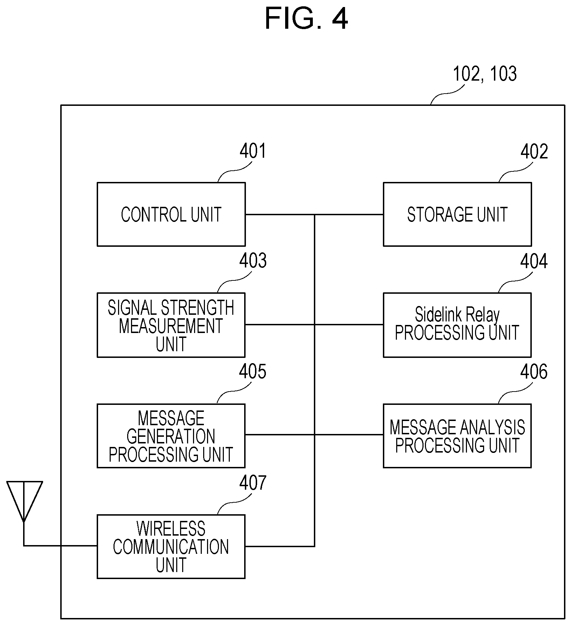

Fig. 4 is a block diagram illustrating an example of a functional configuration of a relay UE (102, 103) according to the present embodiment.

In Fig. 4, description of substantially the same functional blocks as those in Fig. 3 will be omitted. A signal strength measurement unit 403 measures the "signal strength between the relay UE and a relay UE (relay link, PC5 link)", the "signal strength between the relay UE and a remote UE connected to another relay UE using a relay link", and the "signal strength between the relay UE and a base station (Uu link)" as seen from the relay UE. A Sidelink Relay processing unit 404 provides a relay function for connecting a remote UE having a Sidelink connection to the base station 104 via the relay UE. A message generation processing unit 405 transmits a discovery signal to a neighboring remote UE and responds to a discovery signal sent from the remote UE. Furthermore, the message generation processing unit 405 generates an RRC Reconfiguration Complete message and a Measurement report to be transmitted to the base station 104. A message analysis processing unit 406 analyzes a discovery signal transmitted from the remote UE and an RRC Reconfiguration message and the like transmitted from the base station 104.

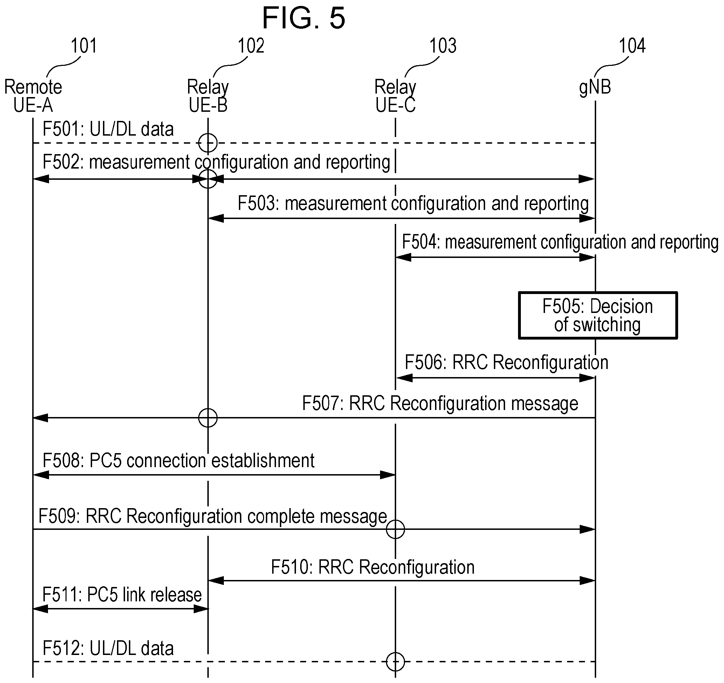

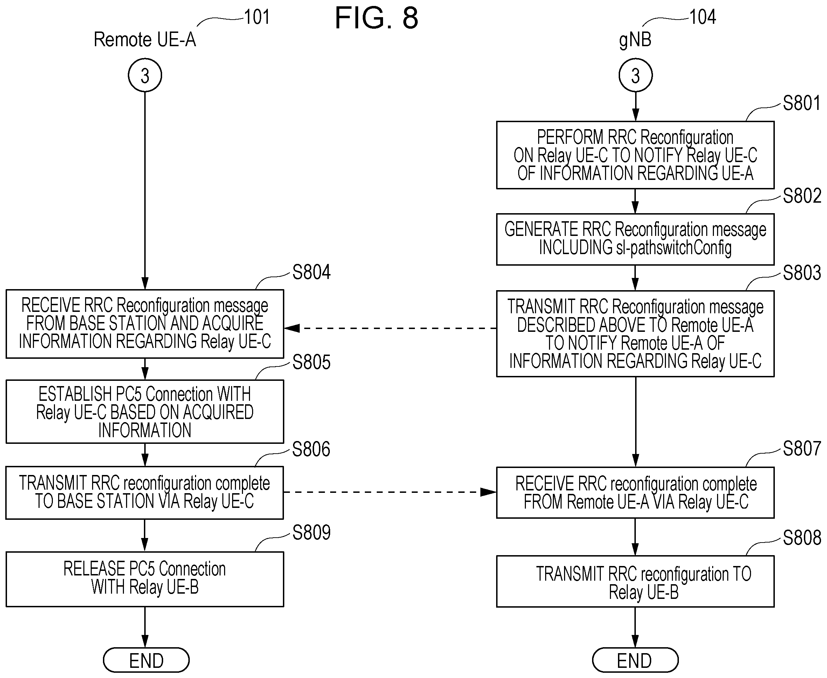

Next, an operation example of the present embodiment will be described with reference to Figs. 5 to 8.

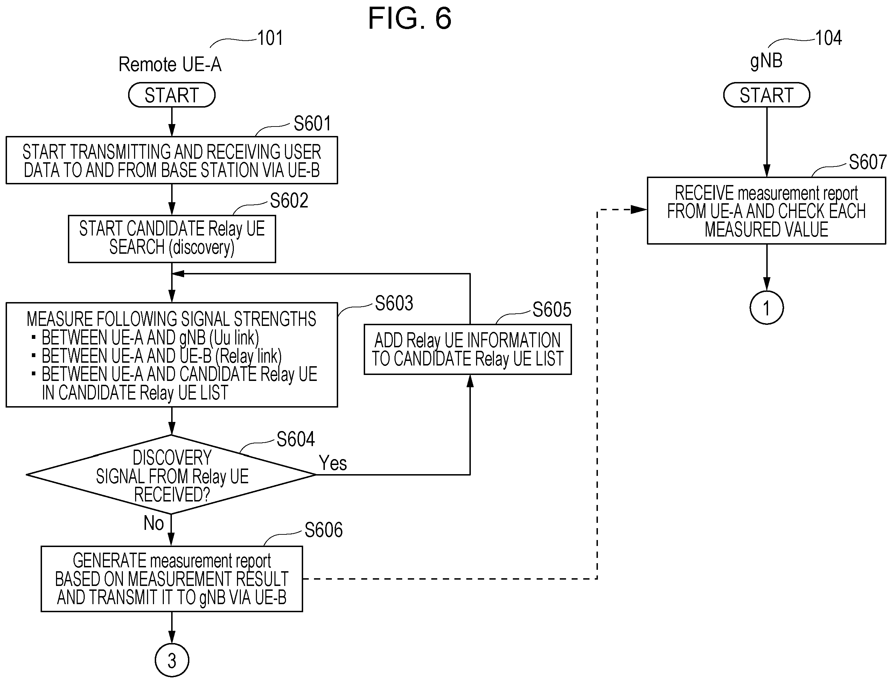

Fig. 5 is an example of a sequence for indirect-to-indirect path switching according to the present embodiment. Figs. 6, 7A, 7B, and 8 are flowcharts divided for processing on the gNB 104 side and processing on the remote UE-A (101) side in the sequence in Fig. 5 according to the present embodiment.

In the gNB 104, each process on the gNB side illustrated in these flowcharts is realized by the control unit 201 executing a control program stored in the storage unit 202. In the remote UE-A (101), each process on the UE side illustrated in these flowcharts is realized by the control unit 301 executing a control program stored in the storage unit 302. Note that one or more of the processes are to be realized in cooperation with the aforementioned hardware and functional units.

In the present embodiment, the remote UE-A (101) is connected to the base station 104 using the Sidelink Relay processing unit 304 via the Sidelink Relay processing unit 404 of the relay UE-B (102). The remote UE-A (101) is transmitting and receiving user data (such as streaming data) through such a connection to the base station 104 (F501, S601).

Next, while transmitting and receiving user data, the control unit 301 of the remote UE-A (101) activates the message generation processing unit 305. The message generation processing unit 305 then generates a discovery request signal and transmits the discovery request signal to the relay UE-B (102) and the relay UE-C (103) through the wireless communication unit 307. The control unit 301 activates the message analysis processing unit 306. The message analysis processing unit 306 prepares for message analysis (namely, initiates discovery) (S602), which is performed when a response signal to the discovery request signal or a discovery request signal from a neighboring relay UE is received through the wireless communication unit 307. Examples of the neighboring relay UE include the relay UE-B (102).

Next, the signal strength measurement unit 303, which has been activated by the control unit 301 of the remote UE-A (101) in advance, starts signal strength measurement. Specifically, the signal strength measurement unit 303 starts measuring the "signal strength between the remote UE-A (101) and the gNB 104" and the "signal strength between the remote UE-A (101) and the relay UE-B (102)" (F502, S603). Note that the link between the remote UE-A (101) and the gNB 104 is hereinafter also referred to as the Uu link. The link between the remote UE-A (101) and the relay UE-B (102) is hereinafter also referred to as the relay link.

Similarly, the signal strength measurement unit 403 of the relay UE-B (102) starts measuring, for example, the "signal strength between the relay UE-B (102) and the remote UE-A (101)" (F503). Similarly, the signal strength measurement unit 403 of the relay UE-C (103) also starts measuring various signal strengths (F504). At this stage, the relay UE-C (103) operates as a relay but may be in a state where the relay UE-C is not connected to any UE. In such a state, the relay UE-C (103) does not emit any signals related to Sidelink.

In a case where the wireless communication unit 307 receives, from a neighboring relay UE, a discovery signal and a response signal to a discovery signal, the message analysis processing unit 306 analyzes the response signal. The ID and serving cell ID of the relay UE that has transmitted the signal are stored in a candidate relay UE list held by the storage unit 302 (S604, S605). In the flowchart illustrated in Fig. 6, a determination of "NO" in Step S604 can be made after a predetermined time from the start of the processing in Step S602. For example, in a case where the control unit 301 transmits a discovery request signal but does not receive a response signal to the discovery request signal even after a predetermined time has elapsed since the transmission, the control unit 301 may determine that "NO" is obtained in Step S604.

In a case where the candidate relay UE list includes a candidate relay UE, the signal strength measurement unit 303 starts measuring the signal strength between the remote UE-A (101) and the candidate relay UE (S603). Fig. 6 illustrates a case where the relay UE-C (103) is identified as a candidate relay UE. At this stage, the relay UE-C (103) is in a relay ready state and is not connected to the remote UE-A (101). However, the relay UE-C (103) transmits a response to a 5G ProSe UE-to-Network Relay direct discovery Announcement message. Alternatively, the relay UE-C (103) transmits a response to Additional Information or a Soliciatioin message. The signal strength measurement unit 303 of the remote UE-A may measure the radio wave strength at the relay UE-C (103) on the basis of the reception result of the response from the relay UE-C (103).

The remote UE-A (101) follows an event specified in advance using a Measurement configuration by the gNB 104.

The message generation processing unit 305 generates a Measurement report in which information regarding the "signal strength of the Uu link", the "signal strength of the relay link", and the "signal strength between the remote UE-A (101) and the candidate relay UE in the candidate relay UE list" is stored. The generated Measurement report is then transmitted to the gNB 104 via the wireless communication unit 307 (F502, S606).

When the wireless communication unit 207 of the gNB 104 receives the Measurement report from the remote UE-A (101), the Measurement report is sent to the message analysis processing unit 206, and the message analysis processing unit 206 analyzes the Measurement report. The message analysis processing unit 206 sends the analysis result to the path switching determination processing unit 204, and the path switching determination processing unit 204 checks the analysis result (S607). In this case, the path switching determination processing unit 204 functions as an acquisition means that acquires the signal strengths of the three types of links described above.

A specific path switching method will be described below.

In a case where the signal strength of the relay link at the remote UE-A (101) is greater than or equal to a first threshold, the path switching determination processing unit 204 determines that relaying can be continued and completes the determination process without performing any operation (S701). In a case where the signal strength of the relay link at the remote UE-A (101) is below the first threshold, the path switching determination processing unit 204 determines that it is difficult to continue relaying and checks the signal strength of the Uu link (an example of third signal strength information) at the remote UE-A (101). In a case where the signal strength of the Uu link is greater than or equal to a second threshold, the remote UE-A (101) is instructed to switch the path from the indirect path to the direct path and perform switching (S702, S703). Note that the second threshold may be the same as or different from the first threshold used in Step S701.

In a case where the signal strength of the Uu link for the remote UE-A (101) is below the second threshold, the path switching determination processing unit 204 determines that it is difficult to continue relaying even if the path is switched to the direct path. The candidate relay UE list is then checked to acquire strength information regarding various signals measured by a relay UE having the same serving cell ID as its own serving cell ID (or a relay UE communicating with the base station 104). Specifically, the signal strength information regarding the remote UE-A (101) measured by the relay UE-C (103) (an example of second signal strength information) is requested (F504, S704). Furthermore, the signal strength information regarding the remote UE-A (101) measured by the relay UE-B (102) (an example of first signal strength information) is requested for strength comparison (F503, S704).

In this case, the signal strength for the remote UE-A (101) measured by the relay UE-C (103) and the signal strength for the remote UE-A (101) measured by the relay UE-B (102) are preferably signal strengths of the same physical channel. In this case, the same physical channel may be a PSBCH or PSDCH.

PSBCH is an abbreviation for Physical Sidelink Broadcast CHannel. PSBCH is a physical channel involved in synchronization in Sidelink communication. PSBCH is periodically transmitted together with the Sidelink-Synchronization Signal Block (S-SSB) in the time-frequency domain other than slots of the resource pool. The signal strength SL-RSRP described above is signal strength based on the physical channel PSBCH.

PSDCH is an abbreviation for Physical Sidelink Discovery CHannel. PSDCH is a physical channel for UE search (discovery) in Sidelink communication. The signal strength SD-RSRP described above is signal strength based on the physical channel PSDCH (defined in 5.1.22 of 3GPP technical specification TS 36.214).

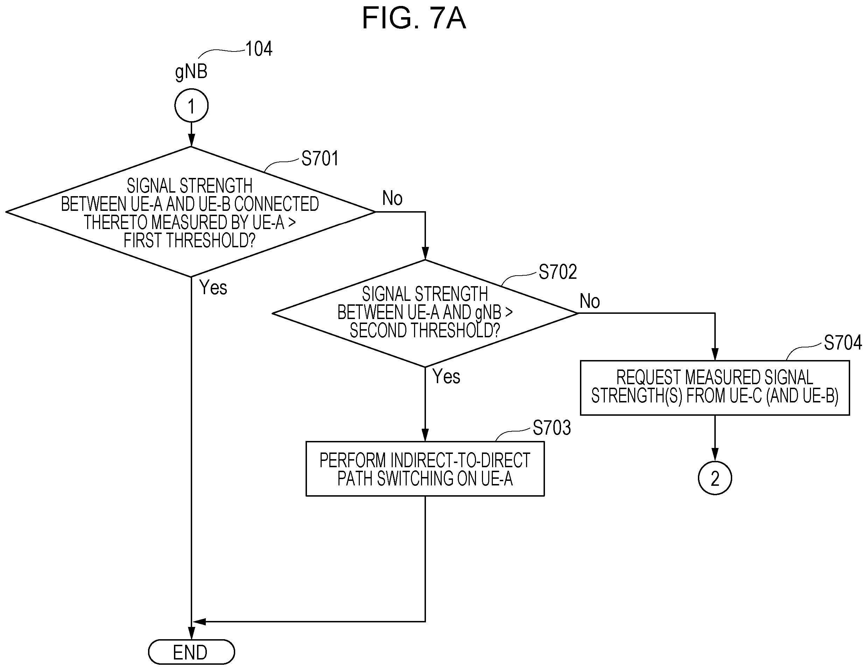

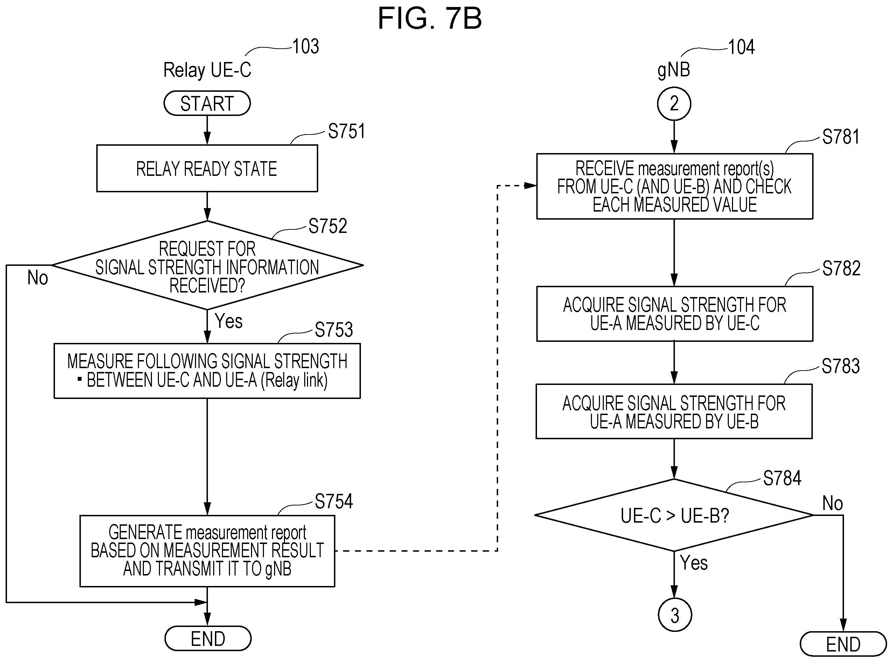

With reference to the flowchart in Fig. 7B, the operation performed when the relay UE-C (103) receives a request for signal strength information in S704 in Fig. 7A and the operation of the gNB 104 following S704 of Fig. 7A will be described. Note that the operation performed when the relay UE-C (103) receives a request for signal strength information in S704 in Fig. 7A is described with reference to Fig. 7B; however, the operation performed when the relay UE-B (102) receives a request for signal strength information in S704 in Fig. 7A may be substantially the same.

Upon receiving a request for signal strength information from the gNB 104 (S752) in the relay ready state in which the relay UE-C (103) is not connected to the remote UE-A (101) or the like (S751), the relay UE-C (103) starts measurement. That is, the signal strength measurement unit 403 of the relay UE-C (103) starts measuring the "signal strength between the relay UE-C (103) and the remote UE-A (101)" (F504, S753). Note that, in a modification, the signal strength measurement unit 403 of the relay UE-C (103) may periodically measure the "signal strength between the relay UE-C (103) and the remote UE-A (101)". In this case, the process in S704 in Fig. 7A may be omitted.

The message generation processing unit 405 of the relay UE-C (103) generates a Measurement report in which information regarding the "signal strength between the relay UE-C (103) and the remote UE-A (101)" is stored (S754). The generated Measurement report is then transmitted to the gNB 104 via a wireless communication unit 407 (F504, S754). Similarly, the relay UE-B (102) transmits a generated Measurement report to the gNB 104 via the wireless communication unit 407 (F503).

Upon receiving the Measurement report(s) from the relay UE-C (103) (and the relay UE-B (102)), the wireless communication unit 207 of the gNB 104 transmits the Measurement report(s) to the message analysis processing unit 206 (S782, S783). The message analysis processing unit 206 then performs analysis. The analysis results from the message analysis processing unit 206 are sent to the path switching determination processing unit 204, and the path switching determination processing unit 204 checks the analysis results (S784).

In a case where the signal strength measured by the relay UE-C (103) is below the signal strength measured by the relay UE-B (102), the path switching determination processing unit 204 determines that it is difficult to continue relaying on any path. In this case, the path switching determination processing unit 204 completes the path switching process ("NO" in S784).

In a case where the signal strength measured by the relay UE-C (103) is greater than or equal to the signal strength measured by the relay UE-B (102), the path switching determination processing unit 204 determines that switching to the indirect path through the relay UE-C (103) is necessary. That is, by switching to the indirect path through the relay UE-C (103), it is determined that the service (for example, streaming) being executed by the remote UE-A (101) can be continued. The path switching determination processing unit 204 then notifies the control unit 201 of the necessity of indirect-to-indirect path switching (F505, "YES" in S784).

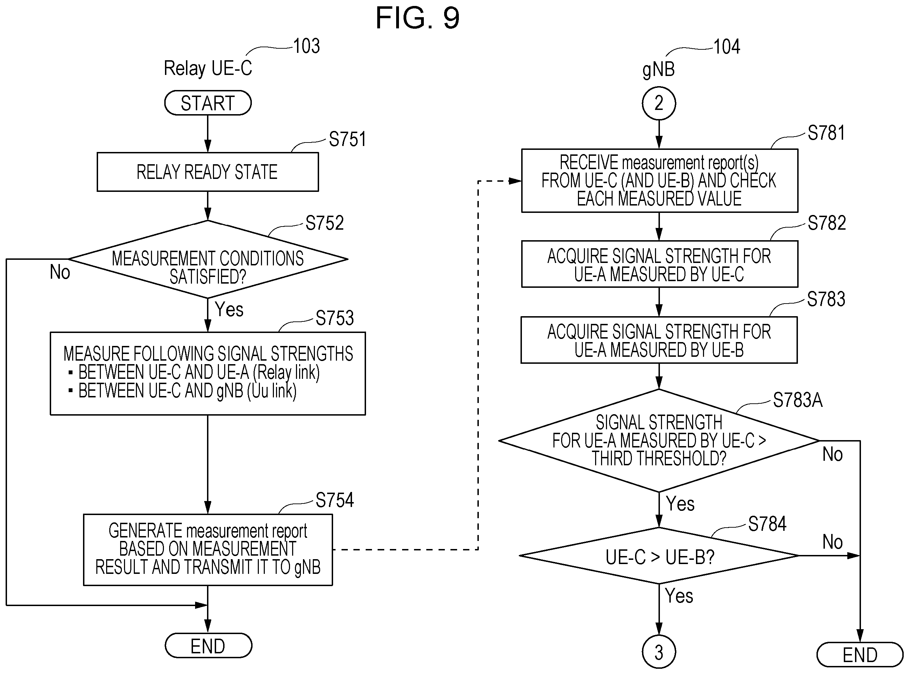

In this case, as in the modification illustrated in Fig. 9, the path switching determination processing unit 204 may further determine whether or not the signal strength measured by the relay UE-C (103) is greater than or equal to a third threshold (S783A). The third threshold may be the same as the first threshold used in S701. In a case where the signal strength measured by the relay UE-C (103) is greater than or equal to the third threshold, the path switching determination processing unit 204 may notify the control unit 201 of the necessity of indirect-to-indirect path switching (F505, "YES" in S784).

Incidentally, the value measured on the remote UE-A (101) side and the value measured on the relay UE side, such as the relay UE-C (103), do not necessarily coincide depending on the timing of measurement, for example, in a case where both of these are mounted on vehicles and move.

In this regard, according to the examples illustrated in Figs. 7B and 9, the measured values obtained in Steps S782 and S783 are used to make a determination in Step S784. This allows comparison of the signal strengths acquired by two relay UEs at substantially the same timing. That is, when comparing the signal strength measured by the relay UE-C (103) and the signal strength measured by the relay UE-B (102), each of the results measured at substantially the same timing can be used. In this case, the values measured on the remote UE-A (101) side are not used, and thus the measurement for the candidate relay UE in Steps S603 and S605 may be omitted. Alternatively, in another modification, the measured values obtained in Step S607 may be used together with the measured values obtained in Steps S782 and S783 to make a determination in Step S784.

The control unit 201 performs RRC reconfiguration on the relay UE-C (103). That is, an RRC reconfiguration message is transmitted to the relay UE-C (103) via the message generation processing unit 205 and the wireless communication unit 207. This notifies the relay UE-C (103) of necessary information for establishing a Sidelink relay communication with the remote UE-A (101). The necessary information includes sl-L2Relay UE-Config. The sl-L2Relay UE-Config includes information used in the Sidelink Relay Adaptation Protocol (SRAP) protocol needed for operation as a relay UE. The control unit 201 confirms reception of an RRC reconfiguration complete message from the relay UE-C (103) via the wireless communication unit 207 and the message analysis processing unit 206. This completes the RRC reconfiguration for the relay UE-C (103) (F506, S801).

Next, the control unit 201 performs RRC reconfiguration on the remote UE-A (101). That is, an RRC reconfiguration message is transmitted to the remote UE-A (101) via the message generation processing unit 205 and the wireless communication unit 207. This notifies the remote UE-A (101) of necessary information for establishing a Sidelink relay communication with the relay UE-C (103). The necessary information includes sl-L2RemoteUE-Config. The sl-L2RemoteUE-Config includes information used in the SRAP protocol needed for operation as a remote UE (F507, S803).

At this time, the message generation processing unit 205 adds the following information to the RRC reconfiguration message. That is, the message generation processing unit 205 adds, to the ReconfigurationWithSync, sl-pathSwitchConfig in which the ID of the relay UE-C (103) is stored (S802). As a result, the remote UE-A (101) can be notified of switching from the indirect path through the relay UE-B (102) to the indirect path through the relay UE-C (103) (S803).

The control unit 301 of the remote UE-A (101) confirms reception of the RRC reconfiguration message from the gNB 104 via the wireless communication unit 307 and the message analysis processing unit 306. In this case, the ID of the relay UE-C (103) is checked from the sl-Path Switch Config. As a result, it is determined that the indirect path through the relay UE-B (102) is switched to the indirect path through the relay UE-C (103) (F507, S804).

Next, the control unit 301 stops transmitting and receiving data to and from the relay UE-B (102), and establishes a communication with the relay UE-C (103) (F508, S805). Thereafter, the remote UE-A (101) and the relay UE-C (103) can use a Sidelink relay communication based on the SRAP protocol information acquired through the RRC reconfiguration message. That is, the remote UE-A (101) can transmit and receive data to and from the gNB 104 via the relay UE-C (103).

After establishing a communication with the relay UE-C (103), the control unit 301 causes the message generation processing unit 305 to generate an RRC reconfiguration complete message. The Sidelink Relay processing unit 304 and the wireless communication unit 307 transmit the RRC reconfiguration complete message to the gNB 104 via the relay UE-C (103) (F509, S806). In this case, the RRC reconfiguration complete message is not transmitted via the relay UE-B (102).

The gNB 104 receives the RRC reconfiguration complete message from the remote UE-A (101) via the relay UE-C (103) through the wireless communication unit 207 and the message analysis processing unit 206. As a result, it can be determined that indirect-path switching for the remote UE-A (101) is completed (F509, S807).

After indirect-path switching for the remote UE-A (101) is completed, the gNB 104 performs RRC reconfiguration on the relay UE-B (102). The relay UE-B (102) is caused to deactivate the Sidelink relay function for the remote UE-A (101) (F510, S808).

In contrast, the remote UE-A (101) releases the link to the relay UE-B (102) (F511, S809).

The process described above allows the gNB 104 and the remote UE-A (101) to perform indirect-to-indirect path switching without service interruption.

### [Other Embodiments]

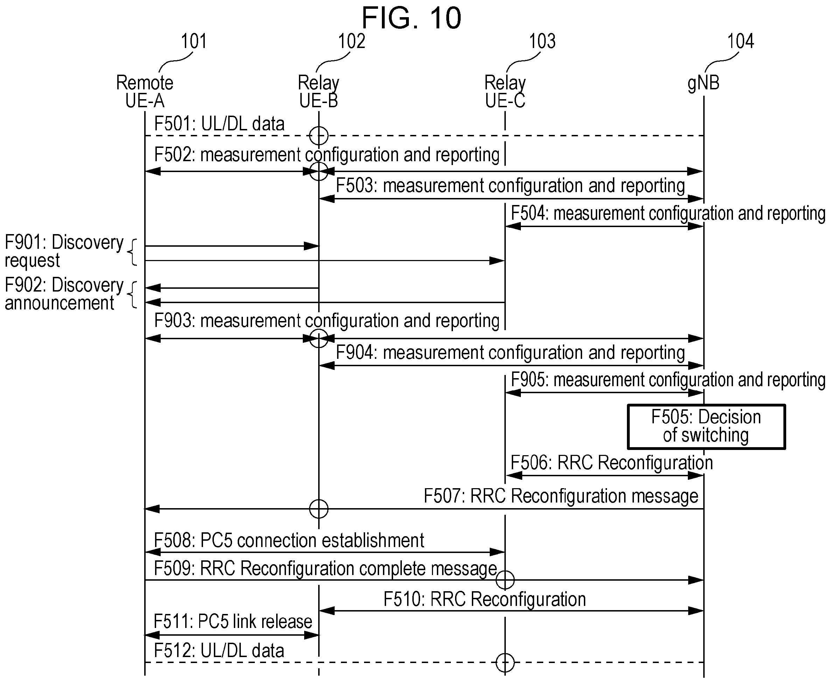

Measured signal strength values, such as SL-RSRP and Sidelink Discovery Reference Signal Received Power (SD-RSRP), are used for comparison in the embodiment described above. Note that SL-RSRP is an abbreviation for Sidelink Reference Signal Received Power. Fig. 10 illustrates an example of a sequence for indirect-to-indirect path switching in a case where SD-RSRP is used as signal strength. In this diagram, F901 denotes a discovery signal transmitted from the remote UE-A (101), and F902 denotes discovery response signals from the relay UE-B (102) and the relay UE-C (103) to the discovery signals. F903 denotes a Measurement report notification including signal strength information regarding the discovery response signals measured by the remote UE-A (101). F904 denotes a Measurement report notification including signal strength information regarding the discovery signal measured by the relay UE-B (102). F905 denotes a Measurement report notification including signal strength information regarding the discovery signal measured by the relay UE-C (103).

In the present embodiment, a case has been described in which a single candidate relay UE is identified; however, it can also be applied to a case where two or more candidate relay UEs are identified. In this case, it is sufficient that the system be configured to acquire measured signal strength values from all of the identified candidate relay UEs to select the best one.

Note that, in a case where the remote UE searches for candidate relay UEs in the present embodiment, the remote UE receives the following. That is, the remote UE receives 5G ProSe UE-to-Network Relay direct discovery Announcement messages or Additional Information. As a result, the remote UE performs a search process for searching for candidate relay UEs in its surrounding area. Note that the remote UE may receive the above-mentioned signals from relay UEs to which the remote UE is connected.

Furthermore, to search for candidate relay UEs, the remote UE can be configured to spontaneously search for candidate UEs in addition to or instead of the above-mentioned search process in which the remote UE searches for a candidate by receiving signals transmitted from the above-mentioned UEs in the surrounding area.

In this case, to search for candidate relay UEs, the remote UE specifically transmits a 5G ProSe UE-to-Network Relay direct discovery Soliciation message. In a case where the remote UE successfully receives responses to the Soliciatioin message, the remote UE is then considered to have identified candidate relay UEs. Note that the remote UE may transmit the above-mentioned signal to relay UEs to which the remote UE is connected, and receive responses to the Soliciatioin message from the relay UEs.

The present invention can also be realized through processing in which a program that realizes one or more functions of the above-mentioned individual embodiments is supplied to a system or device via a network or storage medium, and one or more processors in a computer of the system or device read and execute the program. The present invention can also be realized by a circuit (for example, ASIC or FPGA) that realizes one or more functions.

Although each of the exemplary embodiments has been described in detail, the exemplary embodiments are not limited to specific exemplary embodiments, and various modifications and changes are possible within the scope of the claims. It is also possible to combine all or some of the constructional elements of the exemplary embodiments described above.

The invention is not limited to the above-mentioned embodiments, and various changes and modifications are possible without departing from the spirit and scope of the invention. Accordingly, the following claims are attached to disclose the scope of the present invention to the public.

This application claims the benefit of Japanese Patent Application No. 2023-221346 filed December 27, 2023, which is hereby incorporated by reference herein in its entirety.

## Claims

1. A communication device that relays communication between a User Equipment (UE) and a base station, the communication device comprising:
a measurement means that measures signal strength of communication performed with a UE; and
a notification means that notifies a base station of a measurement result from the measurement means,
wherein, in a relay state in which communication between the UE and the base station is relayed, the notification means notifies the base station of the measurement result regarding the UE for which communication is relayed.

2. The communication device according to claim 1, wherein the relay state includes a state in which the communication device is connected to the UE for which communication is relayed via Sidelink communication, and to the base station via Uu communication.

3. The communication device according to claim 1 or 2, wherein the signal strength according to the measurement result corresponds to at least one of Sidelink Reference Signal Received Power (SL-RSRP) and Sidelink Discovery Reference Signal Received Power (SD-RSRP).

4. The communication device according to any one of claims 1 to 3, wherein the notification means notifies the base station of the measurement result using a Measurement report.

5. A base station comprising:
an acquisition means that acquires, in a first state in which communication with a first User Equipment (UE) is performed via a second UE, first signal strength information indicating signal strength between the first UE and the second UE, from the second UE;
an acquisition means that acquires, in the first state, second signal strength information indicating signal strength between the first UE and a third UE that is not connected to the first UE, from the third UE; and
a comparison means that compares, in the first state, the first signal strength information with the second signal strength information.

6. The base station according to claim 5, comprising:
a processing means that issues a command to switch from the first state to a second state in which the base station communicates with the first UE via the third UE, based on a comparison result from the comparison means.

7. The base station according to claim 5 or 6, wherein the third UE includes a UE that is connected to another base station.

8. The base station according to any one of claims 5 to 7, wherein the first signal strength information and the second signal strength information are measurement results as to SL-RSRP or measurement results as to SD-RSRP.

9. The base station according to claim 6, wherein in a case where the signal strength indicated by the first signal strength information is below a first threshold, the processing means issues the command to switch to the second state.

10. The base station according to claim 6, wherein the acquisition means further acquires third signal strength information indicating signal strength between the base station and the first UE, and
in a case where the signal strength indicated by the third signal strength information is below a second threshold, the processing means issues the command to switch to the second state.

11. The base station according to claim 6, wherein in a case where the signal strength indicated by the second signal strength information is higher than the signal strength indicated by the first signal strength information, the processing means issues the command to switch to the second state.

12. The base station according to claim 6, wherein in a case where the signal strength indicated by the second signal strength information is greater than or equal to a third threshold, the processing means issues the command to switch to the second state.

13. The base station according to any one of claims 6 and 9 to 12, wherein processing for issuing the command to switch includes notifying the third UE of information regarding the first UE using a Radio Resource Control (RRC) reconfiguration message and notifying the first UE of information regarding the third UE using an RRC reconfiguration message.

14. A control method for communication, the control method comprising:
in a first state in which communication between a first User Equipment (UE) and a base station is performed via a second UE,
an acquisition step for acquiring first signal strength information indicating signal strength between the first UE and the second UE, and second signal strength information indicating signal strength between the first UE and a third UE that is not connected to the first UE;
a comparison step for comparing the first signal strength information with the second signal strength information in the first state; and
a processing step for issuing a command to switch from the first state to a second state in which communication between the first UE and the base station is performed via the third UE, based on a comparison result in the comparison step.

15. The control method according to claim 14, wherein the first signal strength information and the second signal strength information correspond to signal strengths of a same physical channel.

16. A program causing a computer to perform:
in a first state in which communication between a first User Equipment (UE) and a base station is performed via a second UE,
an acquisition step for acquiring first signal strength information indicating signal strength between the first UE and the second UE, and second signal strength information indicating signal strength between the first UE and a third UE that is not connected to the first UE;
a comparison step for comparing the first signal strength information with the second signal strength information in the first state; and
a processing step for issuing a command to switch from the first state to a second state in which communication between the first UE and the base station is performed via the third UE, based on a comparison result in the comparison step.

17. The program according to claim 16, wherein the first signal strength information and the second signal strength information correspond to signal strengths of a same physical channel.
